Europäisches Patentamt

European Patent Office

Office européen des brevets

(19)

(11) Publication number: 0 310 200
A2

## (12) EUROPEAN PATENT APPLICATION

(21) Application number: 88202161.1

(22) Date of filing: 30.09.88

(51) Int. Cl.⁴: **D04H 1/54 , D02G 3/02 , B29B 15/10 , B29C 67/14**

(30) Priority: 02.10.87 DE 3733430

(43) Date of publication of application:
05.04.89 Bulletin 89/14

(84) Designated Contracting States:
AT BE CH DE ES FR GB GR IT LI NL SE

(71) Applicant: STAMICARBON B.V.
Mijnweg 1
NL-6167 AC Geleen(NL)

(72) Inventor: Hogenboom, Eric Henricus Maria
Meerssenerweg 96
NL-6222 AK Maastricht(NL)
Inventor: Bruinink, Peter
Maastrichtergrachtstraat 30B
NL-6211 BG Maastricht(NL)

(54) Combinations of filaments having substantially different melting or decomposition points, and use thereof.

(57) The invention relates to combinations which comprise filaments having different melting or decomposition points and which are constructed preferably in the form of yarns, woven fabrics, knitted fabrics and/or nonwovens, the high-melting filaments generally being present in greater amounts that the low-melting filaments. By heating these combinations to a temperature above the melting or decomposition points of the low-melting filaments and a temperature below the melting or decomposition points of the high-melting filaments, with or without molding, it is possible to produce in a simple manner composite materials in which the high-melting filaments acting as reinforcing elements are present in accurately predeterminable configurations.

EP 0 310 200 A2

## Combinations of filaments having substantially different melting or decomposition points, and use thereof.

The present invention relates to combinations of filaments having substantially different melting or decomposition points.

Composite materials are produced by embedding filaments having as high as possible tensile strengths and moduli in matrix materials in which the filaments act as reinforcing elements. These matrix materials conventionally comprise for example heat-curing resins, such as phenolic resins, epoxy resins, vinyl ester resins, polyester resins or acrylate resins, and also of rigid or plasticized polyvinyl chloride resins. The production of such composite articles, from which it is possible to produce various consumer goods, such as sports articles (golf clubs, tennis rackets), boat hulls, aircraft or automotive vehicle parts, hoses etc., is relatively expensive since care must be taken to ensure that the reinforcing filaments are distributed in the matrix material as homogeneously as possible, it frequently being preferred to obtain an enhanced strength in one direction by presenting the fibers in a specific orientation.

It is an object of the present invention to provide a substantially simpler way of producing composite articles of the generic type described.

This object is achieved according to the invention by combinations of filaments having different melting or decomposition points.

By heating, with or without simultaneous molding, these combinations according to the invention at a temperature above the melting or decomposition point of the filaments having low melting or decomposition points and below the melting or decomposition point of the filaments having high melting or decomposition points, a melting or substantial softening takes place to produce a state of low viscosity, so that the melt obtained, or the low viscosity decomposition products, become uniformly distributed between the filaments having high melting or decomposition points and, after cooling down, embed the latter filaments as a matrix.

Since the filament combinations according to the invention are producible in any desired configurations, it is possible to fix the position of the reinforcing filaments accurately in the ready-produced matrix. Preferably, the combinations according to the invention are constructed in the form of yarns, woven fabrics, knitted fabrics and/or nonwovens, so that it is possible to fix the filaments which have high melting and decomposition points and which form the reinforcing elements in the composite materials to be produced in accurately predetermined positions.

Once the filaments having a high melting or decomposition points form the matrix materials of the composite materials to be produced, they are in general present in greater amounts than the filaments having low melting or decomposition points, in particular in amounts between 50 and 90% by weight, based on the entire filaments of the combinations according to the invention.

The filaments having high melting or decomposition points preferably consist of highly drawn filaments of polymers having high molecular weights and high tensile strengths and moduli. Filaments of this type are advantageously produced by the gel process and subsequently drawn to high draw ratios of more than 20, in particular more than 30. Particular preference is given to filaments having tensile strengths of more than 2 GPa and moduli of more than 60 GPa.

The gel process is described in more detail for example in GB-A-2,042,414 and -2,051,667 and also in DE Offenlegungsschrift 3,724,434 and comprises essentially dissolving the polymer used in a particular case for filament production in a solvent, molding the solution at a temperature above the dissolving temperature of the polymer into a filament, cooling the filament, for gelling, down to a temperature below the dissolving temperature, and drawing the filament while removing the solvent. Suitable polymers for producing the filaments having high melting and decomposition points are of any desired type, for example polyolefins, polyesters, polyamides, polyacrylonitriles, polyvinyl alcohols, polyvinyl chlorides etc.

Preferably the filaments having high melting or decomposition points consist of polymers having ultrahigh molecular weights of more than 600,000 g/mol, in particular of polyolefins, particular preference being given to polyethylenes, in particular linear polyethylenes. These polyethylenes may contain minor amounts, preferably not more than 5 mol%, of one or more other alkenes copolymerizable therewith, such as propylene, butylene, pentene, hexene, 4-methylpentene, octene etc. and have 1 to 10, in particular 2 to 6, methyl or ethyl groups per 1,000 carbon atoms. It is of course also possible to use other polyolefins, for example polypropylene homopolymers and copolymers; furthermore, the polyolefins used may also contain minor amounts of one or more other polymers, in particular alkene-1 polymers.

Preferably the high-melting filaments have melting or decomposition points of more than 145°C and the low-melting filaments have melting or decomposition points of less than 135°C.

The filaments having low melting or decomposition points comprise in general polymers which have low molecular weights and which in general have been drawn only to a small extent. Suitable polymers are for example all those which are used conventionally for matrix materials for producing composite materials, for example the above-mentioned polymer matrix materials.

**Claims**

1. A combination of filaments having substantially different melting or decomposition points.

2. A combination as claimed in claim 1, which is present in the form of a yarn, a woven fabric, a knitted fabric and/or a nonwoven.

3. A combination as claimed in either of olaims 1 and 2, wherein the bulk of the filaments comprises filaments having high melting or decomposition points.

4. A combination as claimed in claim 3, wherein the amount of filaments having high melting or decomposition points accounts for 50 to 90% by weight of the total amount of filaments.

5. A combination as claimed in any of claims 1 to 4, wherein the filaments having high melting or decomposition points consist of highly drawn filaments of polymers of high molecular weight and high tensile strengths and also moduli.

6. A combination as claimed in claim 5, wherein the filaments have been produced by the gel process and subsequent drawing to high draw ratios.

7. A combination as claimed in any of claims 1 to 6, wherein the filaments having high melting or decomposition points consist of polymers having an ultrahigh molecular weight of more than 600,000 g/mol (weight average of the molecular weight), in particular of polyolefins.

8. A combination as claimed in any of claims 1 to 7, wherein the filaments having high melting or decomposition points have a melting or decomposition point of more than 145° C.

9. A combination as claimed in any of claims 1 to 8, wherein the filaments having low melting or decomposition points have a melting or decomposition point of less than 135° C.

10. A combination as claimed in claim 9, wherein the filaments having low melting or decomposition points consist of polymers having low molecular weights.

11. Use of a combination as claimed in any of claims 1 to 10 for producing a composite material by heating, with or without molding, at a temperature above the melting or decomposition points of the filaments having low melting or decomposition points and below the melting or decomposition points of the filaments having high melting or decomposition points.